# FASCICULE DE BREVET EUROPEEN

(11) **EP 0 705 881 B1**
(45) Date de publication et mention de la délivrance du brevet: **15.07.1998**
(21) Numéro de dépôt: 95402180.4
(22) Date de dépôt: 28.09.1995
(51) Int. Cl.: C08L 27/06, C08K 3/00, C08K 13/06, C08K 13/02

(54) **Compositions renforçantes pour polymères thermoplastiques comprenant une combinaison synergique de silice micronisée et de sel de calcium ayant des propriétés d'anti-mottage et d'écoulement améliorées**
Verstärkerzusammensetzungen für thermoplastische Polymere enthaltend eine synergistische Kombination von mikronisierter Silica und Calciumsalz welche verbesserte Anti-Verklumpungs- und Fliesseigenschaften aufweist
Reinforcing compositions for thermoplastic polymers comprising a synergistic combination of micronised silica and calcium salt having improved anti-caking and flowing properties

(30) Priorité: 05.10.1994 FR 9411897
(43) Date de publication de la demande: 10.04.1996
(73) Titulaire: ELF ATOCHEM NORTH AMERICA, INC., Philadelphia Pennsylvania 19102-3222 (US)
(72) Inventeur: Berthelo, Chris, Scotch Plains, New Jersey 07076 (US); Kunesch, Paul, F-64230 Ousse (FR); Meunier, Gilles, F-64230 Mazerolles (FR)
(74) Mandataire: Rochet, Michel

(56) Documents cités:
- US-A- 3 985 704
- US-A- 4 278 576
- US-A- 4 956 398

## Description

L'invention a pour objet une composition renforcante pour polymères thermoplastiques ayant des propriétés d'anti-mottage et d'écoulement améliorées, comprenant au moins deux charges inertes.

L'invention concerne notamment une composition renforçante pour polymères de chlorure de vinyle, ladite composition pouvant comprendre un copolymère dérivé du butadiène et/ou d'un ester acrylique et une combinaison "synergique" de CaCo₃ et de silice micromisée.

Certaines résines synthétiques, notamment les résines à base de polychlorure de vinyle ou de copolymère à teneur majoritaire en chlorure de vinyl sont largement utilisées dans l'industrie du bâtiment en raison notamment de leur faible prix et de leurs bonnes propriétés physiques et/ou chimiques.

Néanmoins elles présentent de faibles résistance au choc à température ambiante ou à basse température ou bien également après vieillissement.

On a proposé de pallier ces défauts en incorporant à ces résines thermoplastiques des produits appelés additif choc qui sont généralement des polymères présentant un certain caractère élastomérique.

La quantité pondérale d'élastomère dans ces additifs choc peut varier dans une large mesure. Elle s'échelonne généralement de 40 à 70 %. Cependant, si l'on désire augmenter cette teneur pondérale en élastomère dans l'additif choc, afin d'en augmenter son efficacité, on constate, lors de l'isolement dudit additif sous forme de poudre et, également, lors du stockage, un mottage important.

Ceci entraîne des difficultés de manipulation et est rédhibitoire pour un transport des additifs par voie pneumatique.

Dans le brevet US 4 278 576 on décrit un procédé d'isolement d'additif choc sous forme de poudre qui permet de diminuer le mottage d'un additif choc du type "MBS greffé polymère" ou bien encore de polymères type acrylique core/shell.

Ce procédé, qui permet d'isoler le polymère additif choc sous forme de poudre ayant des propriétés d'écoulement et d'anti-mottage améliorées, comprend l'introduction d'environ 0,5 à 50 % en poids, basés sur le mélange, d'un carbonate de calcium enrobé stéarate ayant un diamètre moyen de particule allant de 0,04 à 1 µm après la formation dudit polymer mais avant ou durant l'isolement des poudres.

Dans le brevet US 3 985 703 on décrit également un procédé qui permet d'obtenir des poudres de polymer acrylique coeur/écorce ayant des teneurs en partie élastomérique allant de 55 à 85 % qui possèdent des propriétés d'écoulement et d'anti-mottage améliorées.

Ce procédé consiste à ajouter notamment au moment du séchage desdites poudres par atomisation 0,01 à 1,5 % de particules inertes de silice micronisée de diamètre de particules égal à 0,012 µm.

On a maintenant trouvé une composition renforcante pour polymère thermoplastique comprenant au moins un additif choc dont la teneur en élastomère est au moins égal à 60%, ayant des propriétés d'anti-mottage et de coulabilité améliorées, caractérisée en ce qu'elle comprend en outre une combinaison synergique constituée par une silice micronisée ayant des particules de diamètre moyen inferieur à 0,02 µm et une surface spécifique, comprise entre 150 et 200 m²/g et au moins un sel de calcium ayant des particules de diamètre moyen allant de 0,04 à 10 µm choisi parmi le carbonate de calcium, le stéarate de calcium, l'hydroxyaluminate de calcium Ca₆Al(OH)₁₅. Selon la présente invention le carbonate de calcium est de préférence enrobé d'un sel de calcium d'un acide gras supérieur ayant au moins 12 atomes de carbone. L'acide stéarique constitue l'acide gras préféré. L'enrobage du sel de calcium est effectué d'une façon classique par mélangeage de l'acides gras et des particules de carbonate de calcium de préférence à des températures comprises entre 60 et environ 200°C, de façon à ce que l'acide gras réagisse avec la surface du carbonate de calcium pour former un enrobage adhérent du sel de calcium sur les particules de carbonate.

Cet enrobage recouvre pratiquement les particules individuelles bien que dans certains cas une partie de l'acide gras puisse également être présente à la surface des particules de carbonate.

Selon l'invention les particules de sel de calcium ont un diamètre moyen allant de 0,04 à 10 µm, et de préférence de 0,5 à 2 µm.

Les particules de carbonate de calcium ont un diamètre moyen allant de 1 à 1,5 µm.

On peut se procurer de tels carbonates de calcium enrobé sous les dénominations OMYALITE 90T et 95T commercialisés par la société OMYA.

Selon la présente invention on préfère utiliser l'OMYALITE 95T qui possède des particules de diamètre moyen d'environ 1,5 µm.

Selon la présente invention, la silice micronisée présente une teneur en SiO₂ au moins égale à 99,5 % et des particules de diamètre moyen inférieure à 0,02 µm et de préférence allant de 0,010 à 0,015 µm. Elle possède une surface spécifique comprise entre 150 et 250 m²/g et, de préférence comprise entre 175 et 225 m²/g.

On peut se procurer de telles silices sous les dénominations CABOSIL M5, AEROSIL R805, AEROSIL R972.

Selon la présente invention, les proportions pondérales de silice micronisée et de sel de calcium peuvent varier dans une large mesure. Cependant, l'effet synergique de la combinaison silice micronisée/sel de calcium se manifeste tout particulièrement lorsque le rapport pondéral sel de calcium/silice micronisée est compris entre 95/5 et 70/30 et, de préférence entre 90/10 et 85/15.

A titre d'illustration des additifs choc utilisables selon la présente invention, on peut citer notamment les copolymères greffés dérivés d'un diène conjugé tel que butadiène ou isoprène choisis parmi les résines thermoplastiques butadiène-styrène telles que les résines acrylonitrile-butadiène-styrène (résines ABS), les résines ester alkylméthacrylique-butadiène-styrène (résine MBS), les résines ester alkylacrylique et/ou méthacrylique-butadiène-styrène. Parmi les résines ester alkylméthacryliques, on peut citer en particulier les résines ester méthylméthacrylique-butadiène-styrène, les résines ester éthylméthacrylique-butadiène-styrène, les résines esterbutylméthacrylique-butadiène-styrène, les résines ester laurylméthacrylique-butadiène-styrène. S'agissant des résines ester alkylacrylique-butadiène-styrène, on peut citer celles dérivées des acrylates de méthyle, d'éthyle, de butyle ou d'éthyl-2 hexyle. On peut également citer les copolymères greffés comprenant un tronc consistant en copolymère statistique d'un diène conjugué et d'un acrylate d'alkyle en C₂-C₁₂ sur lequel sont greffées des chaînes d'un copolymère de méthacrylate d'alkyle en C₁-C₄ et d'acrylate d'alkyle en C₁-C₈, le copolymère tronc pouvant en outre renfermer des motifs dérivés d'un agent réticulant renfermant au moins deux groupement CH₂ = C〈, lesdits copolymères ayant été décrits par exemple dans les brevets français 2 551 446 et 2 551 447.

On peut également utiliser des résines dérivées du butadiène, thermoplastiques lors de la mise en oeuvre et avant vulcanisation, telles que la gomme styrène-butadiène (SBR), la gomme nitrile-butadiène (NBR), la gomme acrylate-butadiène (ABR).

Parmi ces polymères dérivés du butadiène, on donne la préférence aux résines MBS et ABS.

On peut également utiliser des résines essentiellement acryliques, c'est-à-dire renfermant plus de 90 % en poids d'ester acrylique polymérisé.

Selon la présente invention, la teneur en élastomère dans l'additif choc polymérique est au moins égale à 60 % en poids et, de préférence comprise entre 70 % et 90 %.

La composition renforcante selon la présente invention comprend au moins 80 % en poids d'additif choc et, de préférence de 95 % à 99 % ; et au plus 20 % en poids de la combinaison synergique, et de préférence 1 % à 5 %.

Le polymère thermoplastique dans lequel on peut incorporer la composition renforcante conforme à l'invention en vue d'en améliorer la résistance au choc peut notamment consister en polymère du type des polycondensats, notamment polyesters tel que polybutylène téréphtalate, polycarbonates, polyamides ou encore du type des polymères comme, par exemple, polyméthacrylates et notamment polyméthylméthacrylate. Le polymère thermoplastique peut également consister en un ou plusieurs polymères d'addition choisis dans le groupe formé par les homopolymères du chlorure de vinyle qui peuvent être éventuellement surchlorés et les copolymères qui résultent de la copolymérisation du chlorure de vinyle avec un ou plusieurs comonomères éthyléniquement insaturés et qui renferment au moins 80 % en poids de chlorure de vinyle polymérisé. A titre de comonomères pour la préparation de tels copolymères conviennent notamment les halogénures de vinylidène comme le chlorure ou le fluorure de vinylidène, les carboxylates de vinyle comme l'acétate de vinyle, le propionate de vinyle, le butyrate de vinyle, les acides acryliques et méthacrylique ainsi que les nitriles, amides et esters d'alkyle qui en dérivent, notamment acrylonitrile, acrylamide, méthacrylamide, méthacrylate de méthyle, acrylate de méthyle, acrylate de butyle, acrylate d'éthyle, acrylate d'éthyl-2 hexyle, les dérivés vinylaromatiques tels que styrène, vinylnaphtalène, les oléfines telles que bicyco(2.2.1)hept-2-ène, bicyclo(2.2.1)hepta-2,5-diène, éthylène, propène, butène-1.

Parmi ces polymères, l'invention concerne tout particulièrement les homo- et copolymères du chlorure de vinyle.

La composition renforcante de la présente invention est utilisée à raison de 1 à 15 parties pour 100 parties en poids de polymère thermoplastique et, de préférence, de 4 à 9 parties.

L'invention concerne également les compositions comprenant le polymère thermoplastique et la composition renforcante tels que définis ci-avant.

Elle concerne également de telles compositions renfermant en outre, et en fonction notamment des conditions de mise en oeuvre ou de transformation et/ou des applications auxquelles elles sont destinées, les additifs usuels tels que pigments et/ou charges, plastifiants, antioxydants, stabilisants lumière ou ultraviolets.

A titre d'illustration de ces additifs, on peut citer les β-dicétones, hydrotalcites, dihydropyridines, les sels d'acides carboxyliques des métaux tels que Li, Na, K, Mg, Ca, Sr, Ba, Pb, Zn, Cd, Zr, Al, Si, Sb, Bi ou de couples de ces métaux tels que le Ca/Zn, Ba/Ca, Ca/Cd, Ba/Zn ; des mercaptides et notamment des mercaptides d'étain ; des alkyl- ou arylphosphites ; des composés époxydés ; des polyols ; des lubrifiants internes ou externes tels que les cires esters, les esters d'acides gras, les cires de polyéthylène oxydé ou non, l'huile de ricin hydrogénée, le mono-oléate ou le stéarate de glycérol, les esters d'acide montanique ; les charges telles que le dioxyde de titane ou le carbonate de calcium.

A l'exception des plastifiants qui peuvent en général être utilisés à des taux pouvant atteindre 100 % du poids du polymère thermoplastique, les autres additifs précités peuvent être utilisés à des taux pouvant représenter 0,05 à 20 % du poids du polymère thermoplastique.

La composition renforcante selon la présente invention peut être préparée par simple mélange à sec des constituants de la composition dans un appareil qui assure une bonne dispersion de poudres de faible granulométrie. A cet effet on peut utiliser des mélangeurs type Cloup tournant à une vitesse d'au moins 5000 tr/mn et de préférence entre 7000 et 10000 tr/mn.

On peut également préparer un mélange des constituants de la combinaison synergique puis introduire dans le mélange obtenu le ou les additifs choc.

L'additif choc et la combinaison synergique peuvent être incorporés en mélange (composition renforçante) ou tels quels dans le polymère thermoplastique avant, en même temps ou après les autres additifs mentionnés précédemment lorsqu'il en est fait usage.

Le mélange synergique peut être également introduit au moment du séchage de l'additif choc qui peut être réalisé notamment par atomisation. Les exemples qui suives illustrent l'invention.

### Préparation des compositions renforçantes selon l'invention.

Les compositions ont été préparées avec les constituants ci-après :

### Additif choc A1

L'additif choc de type coeur/écorce (80/20) est préparé suivant la technique décrite dans le brevet U.S. No 4 278 576 qui utilise une technique de polymérisation en émulsion standard à savoir, le polymère acrylique coeur/écorce est préparé en utilisant 79,2 parties d'acrylate de butyl, 0,4 partie de butylène glycol diacrylate et 0,4 partie de diallyl maléate comme coeur élastomérique suivi d'une polymérisation de 20 parties de méthacrylate de méthyle.

La poudre est obtenue à partir de l'émulsion par séchage par atomisation.

La teneur en eau de l'additif est de 1 %.

### Additif choc A2

Méthacrylate de méthyle/butadiène/styrène possédant 70 % de phase élastomérique composée uniquement de butadiène vendu sous la dénomination Metablen C 323 par la société METABLEN B.V.

### CaC0₃

CaC0₃ enrobé type OMYALITE 95 T désigné ci-après par CaC0₃ 95 T.

### Silice micronisée

Silice mironisée de type CABOSIL M5 ayant un diamètre égal à 0,012 micron, une teneur en Si0₂ > 99,8 et une surface spécifique égale à 200 m²/g.

### Stéarate de calcium (ci-après St.Ca) STAVINOR CAP SE

Les compositions renforçantes sont réalisées par mélange à sec des différents constituants, à température ambiante dans un mélangeur du type "Cloup" tournant à 7000 tr/mn.

**Sur le mélange obtenu on effectue :**
- le test de mottage
- le test de l'aptitude à l'écoulement désigné ci-après par coulabilité.

- **Test de mottage**

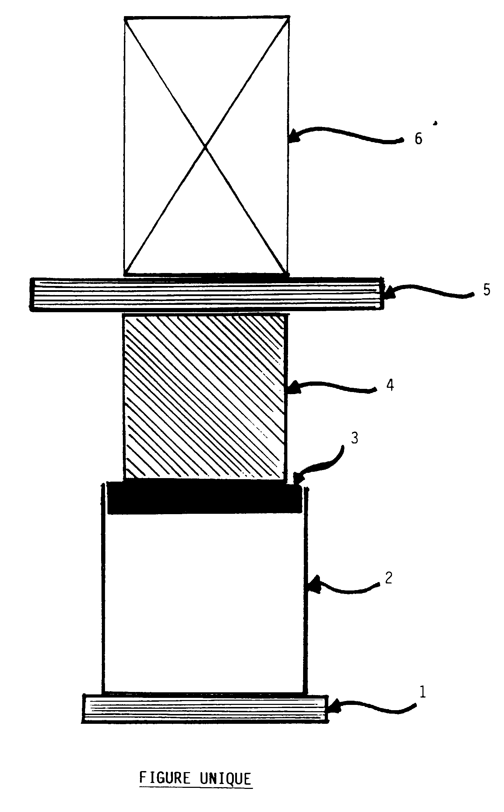

Il est effectué avec un dispositif tel que représenté sur la figure unique.

On dépose sur une plaque de PVC (1) de 60 X 60 mm et d'épaisseur 7 mm un cylindre creux (2) de hauteur égale à 50 mm et de diamètre intérieur égal à 55 mm.

On introduit 20 g de poudre dans le cylindre (2) on aplanit la surface et on applique un disque (3) de diamètre égal à 55 mm et d'épaisseur 10 mm. Sur ce disque on applique un cylindre plein (4) en PVC de diamètre 50 mm et de hauteur égale à 40 mm puis une plaque (5) de 85 X 85 mm et d'épaisseur égale à 6 mm.

L'ensemble est introduit dans une étuve à 45°C et on dépose sur la plaque (5) un poids de 5 kg (6).

On maintient 2 heures à 45°C.

Après 2 heures, on retire le poids de 5 kg, la plaque (5) et le cylindre plein (4).

On conserve à nouveau 30 minutes dans l'étuve à 45°C puis on laisse refroidir l'échantillon de poudre compactée à température ambiante pendant 30 minutes.

La poudre sous forme d'une pastille compactée est introduite dans un tamis de 12 mesh (ouverture de maille = 1,40 mm) d'une tamisette type Prolabo que l'on met en vibration (indice 5,5).

On relève le poids restant toutes les 5 secondes et le temps au bout duquel 60 % du produit est passé.

**Les résultats sont exprimés en secondes** :
- plus le temps est élevé pour que 60 % du produit passe, plus le mottage est important.
- **Le test de l'aptitude à** l'écoulement ou coulabilité est effectué selon la norme internationale ISO 6186-1980 (F).

Les résultats sont exprimés en secondes. Plus le temps est élevé plus l'aptitude à l'écoulement est mauvaise.

Les résultats des tests de mottage et d'aptitude à l'écoulement effectués sur des compositions renforçantes à base des additifs choc A1 ou A2, de la combinaison synergique CaC0₃ 95T/silice ou stéarate de calcium/silice sont reportés dans le tableau 1.

Dans ce tableau les proportions des constituants dans la composition renforçante sont exprimées en pourcentage en poids.

Les exemples 4, 5, 6, 8, 12 et 13 sont selon l'invention. On peut observer que les compositions synergiques CaCO₃/SiO₂ ou stéarate de calcium/SiO₂ améliorent les propriétés d'anti-mottage et de coulabilité des compositions renforçantes de la présente invention. Par exemple pour une composition contenant 2,55 % de CaCO₃ et 0,45 % de silice le produit coule et on a un mottage égal à 8 secondes (exemple 6) alors qu'avec 3 % de CaCO₃ on a un mottage égal à 24 secondes et le produit coule de manière intermittente (exemple 2, non conforme à l'invention).

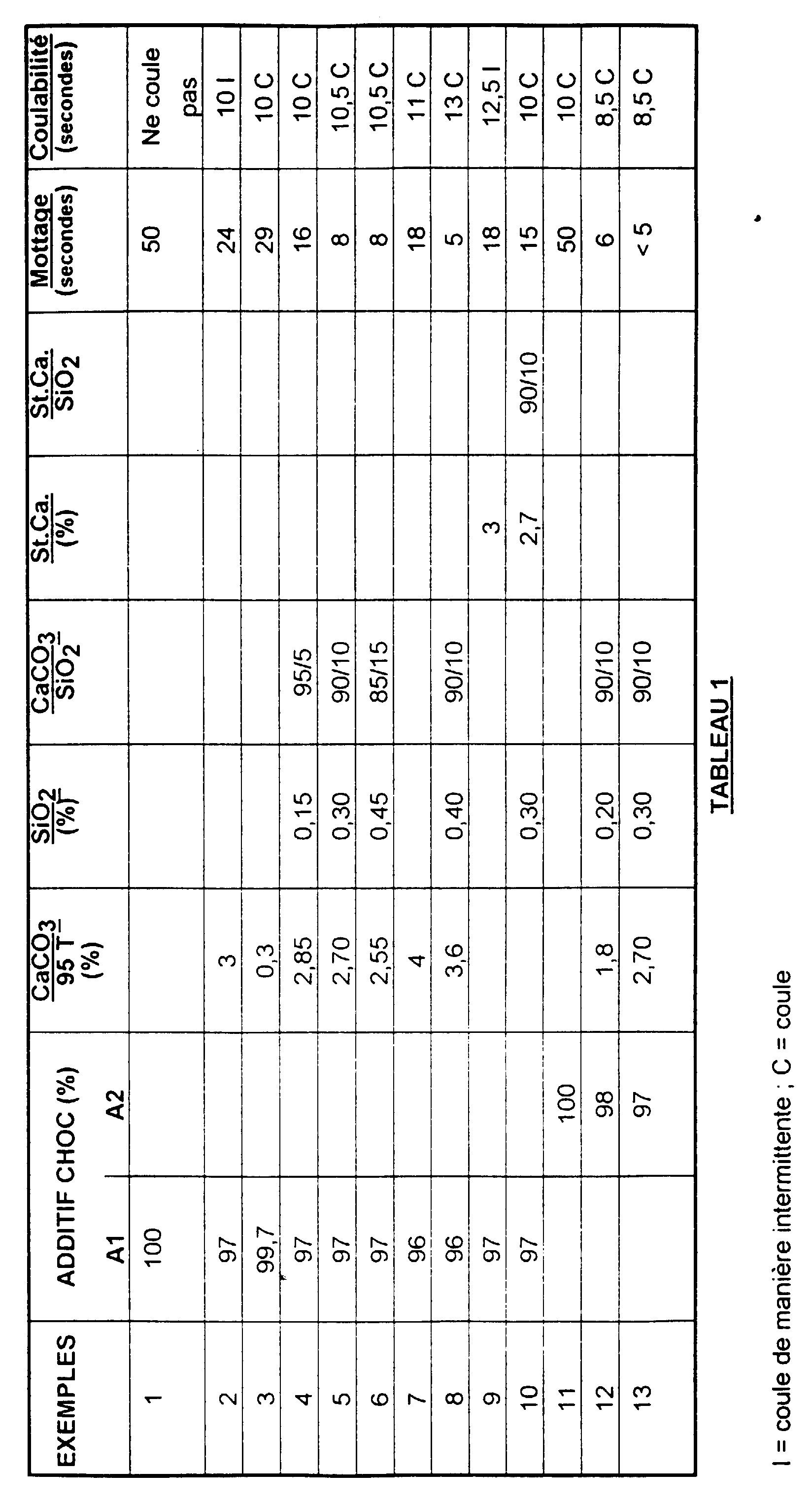

### Evaluation de la résistance au choc des composions selon l'invention

On prépare à 25°C une composition contenant (parties en poids) :
- 100 parties d'un homopolymère du chlorure de vinyle de KW = 67,
- 2,5 parties de phosphite de plomb,
- 1,5 parties de stéarate de calcium,
- 6 parties de carbonate de calcium,
- 4 parties de Ti0₂,
- 1 partie d'un "processing aid" (Metablen P550 commercialisé par la société Metablen B.V.),
- 0,2 partie acide 12 stéarique,
- 0,3 partie de Loxiol G60 (lubrifiant interne),
- 4 parties de cires de polyéthylène (lubrifiant externe) et 9 parties de la composition renforçante de l'exemple 2 non conforme à l'invention [→ exemple 14, tableau 2] ou 9 parties de la composition renforçante de l'exemple 5 conforme à l'invention [→ exemple 15, tableau 2]

A partir des compositions de PVC précédemment obtenues on réalise des éprouvettes pour effectuer les essais de détermination des caractéristiques de résistances au choc Charpy entaillé suivant la norme BS : 2782.

Pour préparer les éprouvettes pour les essais au Choc CHARPY, les compositions de résine de PVC résultant des mélanges des indrédients précités sont calandrées à 175°C pendant 6 minutes sur une calandreuse du type SCHWANBENTHAN, puis moulées à 190°C sur une presse DERRAGON, pendant 5 minutes sous une pression de 200 bars, sous la forme de plaques, le refroidissement desdites plaques ayant lieu sous presse.

Les éprouvettes sont découpées au moyen d'une scie circulaire puis d'une entailleuse pour les essais de Choc CHARPY.

L'épaisseur des éprouvettes, dont la forme est celle prescrite par la norme précitée est de 2,5 mm.

Les résultats sont reportés dans le tableau 2.

**TABLEAU 2**

| **EXEMPLES** | **Energie de casse (en KJ/m**^{**2**}**)** | **% DE CASSE** |
|---|---|---|
| 14 (témoin) | 16,6 | 0 |
| 15 | 16,2 | 0 |

On peut constater que l'addition de la combinaison synergique CaCO₃/SlO₂ (exemple 15) ne modifie quasiment pas la résistance au choc de la composition de PVC.

## Revendications

1. Composition renforçante pour polymère thermoplastique comprenant au moins un additif choc dont la teneur en élastomère est au moins égale à 60%, caractérisée en ce qu'elle comprend en outre une combinaison synergique constituée par une silice micronisée ayant des particules de diamètre moyen inferieur à 0,02 µm et une surface spécifique comprise entre 150 et 250 m²/g et au moins un sel de calcium ayant des particules de diamètre moyen allant de 0,04 à 10 µm choisi parmi le carbonate de calcium, le stérate de calcium, l'hydroaluminate de calcium Ca6Al (OH)15.

2. Composition selon la revendication 1, caractérisée en ce que le carbonate de calcium est enrobé d'un sel de calcium d'un acide gras ayant au moins 12 atomes de carbone.

3. Composition selon la revendication 2, caractérisée en ce que l'acide gras est l'acide stéarique.

4. Composition selon la revendication 1, caractérisée en ce que le sel de calcium a des particules de diamètre moyen allant de 0,5 à 2 µm.

5. Composition selon les revendications 1, 2 ou 4, caractérisée en ce que le carbonate de calcium a des particules de diamètre moyen allant de 1 à 1,5 µm.

6. Composition selon la revendication 1, caractérisée en ce que la silice micronisée a des particules de diamètre moyen allant de 0,010 à 0,015 µm.

7. Composition selon la revendication 1, caractérisée en ce que le rapport pondéral sel de calcium/silice micronisée de la combinaison synergique est compris entre 95/5 et 70/30.

8. Composition selon la revendication 7, caractérisée en ce que le rapport pondéral sel de calcium/silice micronisée est compris entre 90/10 et 85/15.

9. Composition selon la revendication 1, caractérisée en ce que l'additif choc est une résine alkylméthacrylique-butadiène-styrène (MBS) ou une résine acrylique renfermant plus de 90% en poids d'ester acrylique polymérisé.

10. Composition selon l'une quelconque des revendications 1 à 9 caractérisée en ce qu'elle comprend au moins 80% en poids d'additif choc et au plus 20% en poids de la combinaison synergique.

11. Composition selon la revendication 10, caractérisée en ce qu'elle comprend de 95% à 99% en poids d'additif choc et de 1% à 5% en poids de la combinaison synergique.

12. Composition de polymère thermoplastique renfermant une composition renforçante selon l'une quelconque des revendications 1 à 11.

13. Composition de polymère thermoplastique selon la revendication 12, dans laquelle le polymère thermoplastique est un homo- ou copolymère du chlorure de vinyle.

## Patentansprüche

1. Verstärkerzusammensetzung für ein thermoplastisches Polymer, enthaltend mindestens ein Schlagadditiv, dessen Elastomerengehalt mindestens 60 % beträgt, dadurch gekennzeichnet, daß sie darüber hinaus eine synergistische Kombination umfaßt, bestehend aus mikronisiertem Siliciumdioxid mit Teilchen mittleren Durchmessers unterhalb von 0,02 µm und einer spezifischen Oberfläche zwischen 150 und 350 m²/g und aus mindestens einem Calciumsalz mit Teilchen mittleren Durchmessers von 0,04 bis 10 µm, ausgewählt aus Calciumcarbonat, Calciumstearat und calciumhydroaluminat Ca₆Al(OH)₁₅.

2. Zusammensetzung nach Anspruch 1, dadurch gekennzeichnet, daß das Calciumcarbonat umhüllt ist von einem Calciumsalz einer Fettsäure mit mindestens 12 Kohlenstoffatomen.

3. Zusammensetzung nach Anspruch 2, dadurch gekennzeichnet, daß die Fettsäure Stearinsäure ist.

4. Zusammensetzung nach Anspruch 1, dadurch gekennzeichnet, daß das Calciumsalz Teilchen mit einem mittleren Durchmesser von 0,5 bis 2 µm aufweist.

5. Zusammensetzung nach den Ansprüchen 1, 2 oder 4, dadurch gekennzeichnet, daß das Calciumcarbonat Teilchen mit einem mittleren Durchmesser von 1 bis 1,5 µm aufweist.

6. Zusammensetzung nach Anspruch 1, dadurch gekennzeichnet, daß das mikronisierte Siliciumdioxid Teilchen mit einem mittleren Durchmesser von 0,010 bis 0,015 µm aufweist.

7. Zusammensetzung nach Anspruch 1, dadurch gekennzeichnet, daß das Gewichtsverhältnis Calciumsalz/mikronisiertes Siliciumdioxid der synergistischen Kombination zwischen 95/5 und 70/30 liegt.

8. Zusammensetzung nach Anspruch 7, dadurch gekennzeichnet, daß das Gewichtsverhältnis Calciumsalz/mikronisiertes Siliciumdioxid zwischen 90/10 und 85/15 liegt.

9. Zusammensetzung nach Anspruch 1, dadurch gekennzeichnet, daß das Schlagadditiv ein Alkylmethacryl/Butadien/Styrol-Harz (MBS) oder ein Acrylharz mit mehr als 90 Gew.-% polymerisiertem Acrylester ist.

10. Zusammensetzung nach einem der Ansprüche 1 bis 9, dadurch gekennzeichnet, daß sie mindestens 80 Gew.-% Schlagadditiv und höchstens 20 Gew.-% der synergistischen Kombination umfaßt.

11. Zusammensetzung nach Anspruch 10, dadurch gekennzeichnet, daß sie 95 bis 99 Gew.-% Schlagadditiv und 1 bis 5 Gew.-% der synergistischen Kombination umfaßt.

12. Zusammensetzung eines thermoplastischen Polymers, enthaltend eine Verstärkerzusammensetzung nach einem der Ansprüche 1 bis 11.

13. Zusammensetzung eines thermoplastischen Polymers nach Anspruch 12, wobei das thermoplastische Polymer ein Vinylchloridhomo- oder -copolymer ist.

## Claims

1. Reinforcing composition for thermoplastic polymer including at least one impact additive, the elastomer content of which is at least equal to 60%, characterized in that it additionally includes a synergic combination consisting of a micronized silica having particles of mean diameter lees than 0.02 µm and a specific surface area of between 150 and 350 m²/g and at least one calcium salt having particles of mean diameter ranging from 0.04 to 10 µm chosen from calcium carbonate, calcium stearate and calcium hydroaluminate Ca₆Al(OH)₁₅.

2. Composition according to Claim 1, characterized in that the calcium carbonate is coated with a calcium salt of a fatty acid containing at least 12 carbon atoms.

3. Composition according to Claim 2, characterized in that the fatty acid is stearic acid.

4. Composition according to Claim 1, characterized in that the calcium salt has particles of mean diameter ranging from 0.5 to 2 µm.

5. Composition according to Claims 1, 2 or 4, characterized in that the calcium carbonate has particles with a mean diameter ranging from 1 to 1.5 µm.

6. Composition according to claim 1, characterized in that the micronized silica has particles with a mean diameter ranging from 0.010 to 0.015 µm.

7. Composition according to Claim 1, characterized in that the calcium salt/micronized silica weight ratio of the synergic combination is between 95/5 and 70/30.

8. Composition according to Claim 7, characterized in that the calcium salt/micronized silica weight ratio is between 90/10 and 85/15.

9. Composition according to Claim 1, characterized in that the impact additive is a methacrylic alkyl ester-butadiene-styrene (MBS) resin or an acrylic resin containing more than 90 % by weight of polymerized acrylic ester.

10. Composition according to any one of Claims 1 to 9, characterized in that it includes at least 80 % by weight of impact additive and not more than 20 % by weight of the synergic combination.

11. Composition according to Claim 10, characterized in that it includes from 95 % to 99 % by weight of impact additive and from 1 % to 5 % by weight of the synergic combination.

12. Thermoplastic polymer composition containing a reinforcing composition according to any one of Claims 1 to 11.

13. Thermoplastic polymer composition according to Claim 12, in which the thermoplastic polymer is a vinyl chloride homo- or copolymer.
